(19) Europäisches Patentamt
European Patent Office
Office européen des brevets

(11) **EP 2 238 195 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(21) Anmeldenummer: **09705950.5**

(22) Anmeldetag: **26.01.2009**

(51) Int Cl.:
**C08G 65/00** *(2006.01)*

(86) Internationale Anmeldenummer:
**PCT/EP2009/050812**

(87) Internationale Veröffentlichungsnummer:
**WO 2009/095363 (06.08.2009 Gazette 2009/32)**

(54) **VERFAHREN ZUR HERSTELLUNG VON POLYETHERALKOHOLEN**

METHOD FOR THE PRODUCTION OF POLYETHER ALCOHOLS

PROCÉDÉ DE PRODUCTION D'ALCOOLS POLYÉTHERS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.01.2008 EP 08150748**

(43) Veröffentlichungstag der Anmeldung:
**13.10.2010 Patentblatt 2010/41**

(73) Patentinhaber: **BASF SE**
**67056 Ludwigshafen (DE)**

(72) Erfinder:
• **MIJOLOVIC, Darijo**
**68309 Mannheim (DE)**

• **HAUNERT, Andrea**
**Singapore 098638 (SG)**
• **KUNST, Andreas**
**67063 Ludwigshafen (DE)**
• **BAUER, Stephan**
**65239 Hochheim (DE)**
• **MIAO, Qiang**
**68199 Mannheim (DE)**
• **ELING, Berend**
**49448 Lemförde (DE)**

(56) Entgegenhaltungen:
**EP-A- 1 790 678      WO-A-2004/096744**
**WO-A-2004/096883      WO-A-2006/047436**

**Beschreibung**

Gegenstand der Erfindung ist ein Verfahren zur Herstellung von Polyetheralkoholen, für die Verwendung in Polyurethan-Weichschaumstoffen unter Einsatz natürlicher Öle.

Polyurethan-Weichschaumstoffe werden in vielen technischen Gebieten, insbesondere zur Polsterung oder Geräuschdämmung, eingesetzt. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln sowie gegebenenfalls Katalysatoren und üblichen Hilfs- und/oder Zusatzstoffen.

Der Markt verlangt aus ökologischen Gründen zunehmend nach Schaumstoffen, auf Basis von nachwachsenden Rohstoffen (siehe hierzu D. Reed, Urethanes Technology, August/September, 2005, 24-35). Derartige Schaumstoffe werden zumeist hergestellt durch Verwendung von natürlichen Fetten und/oder Ölen, die üblicherweise vor dem Einsatz in Polyurethan Weichschaumstoffen chemisch modifiziert werden, um mindestens zwei mit Isocyanatgruppen reaktive Wasserstoffatome einzuführen. Bei den chemischen Modifikationen werden zumeist natürliche Fette und/oder Öle hydroxyfunktionalisiert und gegebenenfalls in einem oder mehreren weiteren Schritten modifiziert. Als Beispiele für Anwendungen von hydroxy-funktionalisierten Fett- und/oder Ölderivaten in PU-Systemen seien hierzu WO 2004/096744, WO 2005/033167, WO 2006/012344, US 6,686,435, GB 2,278,350 genannt. Allen Anmeldungen ist gemein, dass die hydroxy-funktionalisierten Fette und/oder Öle nicht mit Alkylenoxiden in einem weiteren Schritt umgesetzt werden. Als Handelsprodukte seien hier genannt die Soyol™-Polyole (Soyol R2-052, Soyol R2-052-A, Soyol R2-052-B, Soyol R2-052C, Soyol R2-052-E, Soyol R2-052-F, Soyol R2-052-G) der Urethane Soy Systems Co. (USSC), Agrol™ Soy Polyole (Agrol 1.3, Agrol 1.5, Agrol 1.8, Agrol 2.0, Agrol 2.5, Agrol 2.8, Agrol 3.0, Agrol 3.5, Agrol 4.0, Agrol 5.0, Agrol 6.0, Agrol 7.0) von BioBased Technologies, BiOH™-Polyole von Cargill oder Natural Oil Polyols (NOP) von Dow, Merginol® -Typen der Fa. Hobum Oleochemicals GmbH, Sovermol® -Typen der Fa. Cognis Deutschland GmbH & Co. KG. Nachteil dieser häufig als natürlich basierte Polyole bezeichneten Substanzklasse ist, dass Sie für Anwendungen in PU Weichschaumsystemen die üblicherweise verwendeten erdölbasierten Polyetheralkohole nicht vollständig substituieren können.

Die EP 1 537 159 B1 beschreibt ein Verfahren zur Alkoxylierung von natürlichen Rohstoffen unter Verwendung von Doppelmetallcyaniden, auch als DMC Katalysatoren bezeichnet, zur Herstellung von Polyetherolen für emmissionsarme Polyurethan-Weichschaumstoffe. Hierbei wird vor allem Ricinusöl als möglicher natürlicher Rohstoff genannt. Die häufigste Fettsäure in Ricinusöl ist Ricinolsäure mit 70 - 85 %. Ricinolsäure besitzt natürlicher Weise eine OH-Gruppe. Je nach Anteil der Ricinolsäure hat Ricinusöl eine mittlere Funktionalität von 2,5 - 3,0. Eine chemische Modifizierung zur Einführung von OH-Gruppen kann daher entfallen. Dem Fachmann ist klar, dass mittels chemischer Verfahren dennoch optional zusätzliche OH-Gruppen eingeführt werden können. Ein Nachteil von Ricinusöl ist, dass das natürliche Vorkommen im Vergleich zu Ölen wie Soja-, Palm-, Raps oder Sonnenblumenöl sehr gering ist. Ricinusöl ist daher im Vergleich teurer und der Einsatz in PU-Systemen aus ökonomischer Sicht unattraktiv.

Für die Herstellung von Polyetheralkoholen auf Basis nachwachsender Rohstoffe, die in Polyurethan-Weichschaumstoffen Verwendung finden, und die durch Anlagerung von Alkylenoxiden an H-acide Verbindungen erhalten werden, haben sich natürlich vorkommende hydroxyfunktionalisierte Fette wie Ricinusöl als Startmaterialien bewährt (siehe EP 1 537 159 und JP2005320437).

In EP 1 709 678 wird ein Verfahren zur Herstellung von Polyolen auf Basis von natürlichen Öle beschrieben, bei dem ungesättigte Triglyceride mit Peroxicarbonsäuren oder Wasserstoffperoxid oxidiert, die gebildeten Epoxidgruppen in Alkoholgruppen überführt und diese mit Alkylenoxiden umgesetzt werden. Dieses Verfahren ist schwierig zu führen, und die eingesetzten Oxidationsmittel sind nicht leicht zu handhaben.

WO 2004/096883 beschreibt ein Verfahren zur Herstellung von Polyurethan-Weichschaumstoffen unter Verwendung von Veresterungsprodukten hydroformylierter Fettsäuren.

In WO 2007/085548 wird ein Verfahren zur Herstellung von viskoelastischen Weichschaumstoffen beschrieben, zu deren Herstellung Hydroxylgruppen enthaltende Naturstoffe, insbesondere natürliche Fette und Öle, sowie deren Umsetzungsprodukte mit Alkylenoxiden eingesetzt werden. Auch hier wird vorzugsweise Rizinusöl eingesetzt.

Die in den bekannten Verfahren zur Herstellung von Polyurethanen verwendeten Polyole aus natürlichen Fetten und Ölen sind in ihrer Funktionalität begrenzt.

Da die Funktionalität des resultierenden Polyetheralkohols im Wesentlichen durch die Funktionalität der Startermoleküle, die für die Anlagerung von Alkylenoxiden mit Hilfe eines DMC-Katalysators verwendet werden, determiniert wird, verfügen beispielsweise entsprechende Polyetheralkohole auf Basis Ricinusöl in der Regel über eine mittlere OH-Funktionalität von ca. 2,7. Die für Polyurethan-Weichschäume verwendeten erdölbasierten Polyetheralkohole besitzen üblicherweise OH-Funktionalitäten im Bereich zwischen 2 - 4. Somit stellt Ricinusöl grundsätzlich ein gutes Ausgangsmaterial für die Herstellung der genannten Polyetheralkohole auf Basis natürlicher Fette dar. Die DMC-Katalyse bietet bei der Umsetzung von natürlichen Fetten den generellen Vorteil, dass im Gegensatz zu anderen Alkoxylierverfahren der Anteil an Spaltungsprodukten und somit die Bildung von geruchsbildenden Komponenten im resultierenden Polyurethan-Weichschaum vergleichsweise gering ist. Grundsätzlich ist die Verwendung von Ricinusöl als Startermolekül für die DMC-katalysierte Anlagerung von Alkylenoxiden jedoch auch mit Einschränkungen bzw. Nachteilen verbunden: Im Polyurethan-Weichschaum erfolgt die Einstellung von mechanischen Eigenschaften unter anderem über den Grad der Vernetzung und somit zwangsläufig über die Wahl der Funktionalität und der Kettenlänge des verwendeten Polyetheralkohols. Im Falle von Ricinusöl ist bei einer ausschließlichen Verwendung die Einstellung der Funktionalität des Polyetheralkohols nur eingeschränkt möglich, da - wie bereits erwähnt - die Endfunktionalität des Polyetheralkohols im Wesentlichen durch die Funktionalität des Startermoleküls determiniert wird. Somit muss für die gezielte Einstellung bestimmter mechanischer Eigenschaften des Polyurethan-Weichschaumstoffes das alkoxylierte Rizinusöl in Kombination mit anderen Polyolen eingesetzt werden.

Weiterhin besteht im Falle von Rizinusöl, wie oben gesagt, der Nachteil, dass die globale Verfügbarkeit im Gegensatz zu anderen kommerziell erhältlichen Ölen (z. B. Sonnenblumenöl, Sojaöl, Rapsöl, Palmöl etc.) eingeschränkt ist.

Es war die Aufgabe der Erfindung, Polyole auf Basis von natürlichen Fetten und Ölen bereitzustellen, die in ausreichender Menge und preiswert zur Verfügung stehen, die einen breiten Bereich von Eigenschaften, insbesondere einen breiten Bereich der Funktionalität abdecken und zu Polyurethanen für unterschiedliche Anwendungen, insbesondere solche mit einem verminderten Wert an Emissionen verarbeitet werden können, bereitzustellen. Die Polyole sollten insbesondere für die Herstellung von Polyurethan-Weichschaumstoffen einsetzbar sein.

Die Aufgabe konnte gelöst werden, indem ein natürliches Fett in einem ersten Reaktionsschritt über eine Hydroformylierung mit sich anschließender Hydrierung hydroxyfunktionalisiert und dieses Produkt in einem zweiten Schritt unter Verwendung eines Katalysators, insbesondere eines DMC-Katalysators, mit Alkylenoxiden umgesetzt wird.

Gegenstand der Erfindung sind Verfahren gemäß den Ansprüchen 1-6.

Hierin beschrieben sind auch die nach dem erfindungsgemäßen Verfahren hergestellten Polyetheralkohole.

Gegenstand der Erfindung ist weiterhin ein Verfahren zur Herstellung von Polyurethanen, insbesondere Polyurethan-Weichschaumstoffen, durch Umsetzung von Polyisocyanaten mit Verbindungen mit mindestens zwei mit Isocyanatgruppen reaktiven Wasserstoffatomen, dadurch gekennzeichnet, dass als Verbindungen mit mindestens zwei mit Isocyanatgruppen reaktiven Wasserstoffatomen die nach dem erfindungsgemäßen Verfahren hergestellten Polyetheralkohole eingesetzt werden.

Bevorzugt wird als Katalysator in Schritt d) ein DMC-Katalysator eingesetzt wird.

Beispiele für Verbindungen aus natürlichen, ungesättigten Ölen und/oder Fetten sind Rizinusöl, Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Wildrosenöl, Distelöl, Walnussöl, Palmöl, Fischöl, Kokosnussöl, Tallöl, Maiskeimöl, Leinsamenöl. Bevorzugt sind Rizinusöl, Soja-, Palm-, Sonnenblumen- und Rapsöl. Besonders bevorzugt Soja-, Palm-, Sonnenblumen- und Rapsöl, die im großtechnischen Maßstab insbesondere auch für die Biodieselproduktion verwendet werden. Neben den genannten Ölen können auch solche Öle verwendet werden, die aus gentechnisch veränderten Pflanzen erhalten wurden und eine andere Fettsäurezusammensetzung aufweisen.

Die Hydrofomylierung in Schritt a) kann nach dem üblichen und bekannten Verfahren durchgeführt werden. Dabei wird ein ungesättigtes natürliches Öl, optional in Gegenwart eines geeigneten Lösungsmittels, mit Synthesegas, das heißt einem Gemisch aus Kohlenmonoxid und Wasserstoff, üblicherweise unter Druck und in Gegenwart eines Übergangsmetall-Carbonylkomplex Katalysators des Cobalts, beispielsweise Dicobaltoctacarbonyl $Co_2(CO)_8$, unter Bildung von aliphatischen Aldehydgruppen umgesetzt.

Die Umsetzung erfolgt bei 100 bis 400 bar, vorzugsweise bei 250 bis 300 bar. Die Temperatur beträgt 100 bis 200 °C, vorzugsweise 150 bis 190 °C. Das Volumenverhältnis von Kohlenmonoxid zu Wasserstoff liegt in den technisch üblichen Bereichen, vorzugsweise zwischen 40:60 und 60:40, insbesondere bei annähernd 50:50.

Nach der Umsetzung wird der Katalysator in Schritt b) deaktiviert und aus dem **Reaktionsgemisch** entfernt. Die Deaktivierung des Katalysators erfolgt vorzugsweise durch Zusatz von Säure und Einleitung von Luft. Dabei kommt es zu einer Phasentrennung. Die organische Phase wird abgetrennt und gereinigt, vorzugsweise mit Wasser gewaschen. Die so behandelte organische Phase wird in Schritt c) hydriert. Auch dies erfolgt nach üblichen und bekannten Verfahren. Dazu wird die gereinigte organische Phase aus Schritt b), vorzugsweise in Gegenwart eines geeigneten Lösungsmittels, mit Wasserstoff umgesetzt. Dazu wird die organische Phase, vorzugsweise nach Zusatz von Wasser in einer Menge von 5-10 Gew.-%, bei einem Druck von 50 bis 300 bar, insbesondere 150 bis 300 bar und einer Temperatur von 50 bis 250 °C, insbesondere 100 bis 150 °C in Anwesenheit von Hydrierkatalysatoren umgesetzt. Als Hydrierkatalysatoren können die üblichen heterogenen Katalysatoren eingesetzt werden. Vorzugsweise werden Nickel enthaltende Katalysatoren verwendet. Die Katalysatoren können außer Nickel noch weitere Metalle enthalten, beispielsweise Kobalt, Kupfer, Molybdän, Palladium oder Platin. Die Hydrierung wird vorzugsweise im Festbett durchgeführt.

Nach der Hydrierung wird das entstandene Wasser und gegebenenfalls das Lösungsmittel abgetrennt und, sofern erforderlich, das Produkt gereinigt.

Das so erhaltene Produkt wird in einem weiteren Verfahrensschritt mit Alkylenoxiden umgesetzt.

Die Umsetzung mit den Alkylenoxiden erfolgt üblicherweise in Anwesenheit von Katalysatoren. Hierbei können prinzipiell alle Alkoxylierungskatalysatoren zum Einsatz kommen, beispielsweise Alkalimetallhydroxide oder Lewissäuren. Bevorzugt kommen jedoch Multimetallcyanidverbindungen, so genannte DMC-Katalysatoren, zum Einsatz.

Die eingesetzten DMC-Katalysatoren sind allgemein bekannt und beispielsweise in EP 654 302, EP 862 947 und WO 00/74844 beschrieben.

Die Umsetzung mit Alkylenoxiden wird üblicherweise mit einer DMC-Konzentration von 10 - 1000 ppm, bezogen auf das Endprodukt, durchgeführt. Besonders bevorzugt wird die Reaktion mit einer DMC-Konzentration von 20 - 200 ppm durchgeführt. Ganz besonders bevorzugt wird die Reaktion mit einer DMC-Konzentration von 50 - 150 ppm durchgeführt.

Als Alkylenoxide können alle bekannten Alkylenoxide verwendet werden, beispielsweise Ethylenoxid, Propylenoxid, Butylenoxid, Styroloxid. Insbesondere werden als Alkylenoxide Ethylenoxid, Propylenoxid und Mischungen aus den genannten Verbindungen eingesetzt.

Die hydroformylierten und hydrierten natürlichen Öle aus Verfahrensschritt c) können vorzugsweise allein mit den Alkylenoxiden umgesetzt werden.

Es ist jedoch auch möglich, die Umsetzung mit den Alkylenoxiden im Beisein von so genannten Co-Startern durchzuführen. Als Co-Starter können vorzugsweise Alkohole verwendet werden, wie höherfunktionelle Alkohole, insbesondere Zuckeralkohole, beispielsweise Sorbit, Hexit und Sucrose, zumeist jedoch zwei- und/oder dreifunktionelle Alkohole oder Wasser, entweder als Einzelsubstanz oder als Gemisch aus mindestens 2 der genannten Co-Starter. Beispiele für zweifunktionelle Startsubstanzen sind Ethylenglykol, Diethylenglykol, Propylenglykol, Dipropylenglykol, Butandiol-1,4 und Pentandiol-1,5. Beispiele für dreifunktionelle Startsubstanzen sind Trimethylolpropan, Pentaerythrit und insbesondere Glyzerin. Die Startsubstanzen können auch in Form von Alkoxylaten, insbesondere solche mit einem Molekulargewicht $M_n$ im Bereich von 62 bis 15000 g/mol zum Einsatz kommen. Prinzipiell ist hierbei auch die Verwendung von Ricinusöl oder alkoxyliertem Ricinusöl möglich.

Die Anlagerung der Alkylenoxide bei der Herstellung der für das erfindungsgemäße Verfahren eingesetzten Polyetheralkohole kann nach den bekannten Verfahren erfolgen. So ist es möglich, dass zur Herstellung der Polyetheralkohole nur ein Alkylenoxid eingesetzt wird. Bei Verwendung von mehreren Alkylenoxiden ist eine so genannte blockweise Anlagerung, bei der die Alkylenoxide einzeln nacheinander angelagert werden, oder eine sogenannte statistische Anlagerung, bei der die Alkylenoxide gemeinsam zudosiert werden, möglich. Es ist auch möglich, bei der Herstellung der Polyetheralkohole sowohl blockweise als auch statistische Abschnitte in die Polyetherkette einzubauen. Des Weiteren sind gradientenartige oder alternierende Abschnitte möglich.

Vorzugsweise werden zur Herstellung von Polyurethan-Blockweichschaumstoffen Polyetheralkohole mit einem hohen Gehalt an sekundären Hydroxylgruppen und einem Gehalt an Ethylenoxideinheiten in der Polyetherkette von maximal 30 Gew.-%, bezogen auf das Gewicht des Polyetheralkohols, verwendet. Vorzugsweise haben diese Polyetheralkohole am Kettenende einen Propylenoxidblock. Für die Herstellung von Polyurethan-Formweichschaumstoffen werden insbesondere Polyetheralkohole mit einem hohen Gehalt an primären Hydroxylgruppen und einem Ethylenoxid-Endblock in einer Menge von < 10 Gew.-%, bezogen auf das Gewicht des Polyetheralkohols, verwendet.

In einer besonderen Ausführungsform der Anlagerung von Mischungen aus mindestens zwei Alkylenoxiden kann das Verhältnis der Alkylenoxide zueinander während der Anlagerung verändert werden, wie in DE 199 60 148 A1 und in DE 10 2004 047 524 A1 beschrieben.

Die Anlagerung der Alkylenoxide erfolgt bei den üblichen Bedingungen, das heißt bei Temperaturen im Bereich von 60 bis 180°C, bevorzugt zwischen 90 bis 140°C, insbesondere zwischen 100 bis 130°C und Drücken im Bereich von 0 bis 20 bar, bevorzugt im Bereich von 0 bis 10 bar und insbesondere im Bereich von 0 bis 5 bar. Die Mischung aus Startsubstanz und DMC-Katalysator kann vor Beginn der Dosierung der Alkylenoxide gemäß der Lehre von WO 98/52689 durch Strippen vorbehandelt werden

In einer weiteren Ausführungsform, beispielsweise beschrieben in DD 203734/735, wird neben den Alkylenoxiden während der Synthese einer oder mehrere weitere Starteralkohole zudosiert, die mit dem vorgelegten identisch oder von diesem verschieden sein können

In einer weiteren Ausführungsform kann das Verfahren ein kontinuierliches sein.

Nach Beendigung der Anlagerung der Alkylenoxide wird der Polyetheralkohol nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und oder anderen Methoden der Desodorierung. Falls erforderlich, kann auch eine Filtration erfolgen.

Der DMC-Katalysator kann nach der Umsetzung im Produkt verbleiben.

Die Polyetheralkohole aus dem Prozessschritt d) haben vorzugsweise eine mittlere Funktionalität von 2 bis 4, insbesondere von 2 bis 3 und eine Hydroxylzahl im Bereich zwischen 20 und 70 mg KOH/g, vorzugsweise zwischen 20 und 60 mg KOH/g.

Wie oben beschrieben, werden die Polyetheralkohole zur Herstellung von Polyurethanen, insbesondere Polyurethan-Weichschaumstoffen, eingesetzt.

Die Herstellung der erfindungsgemäßen Polyurethan-Weichschaumstoffe kann ebenfalls nach üblichen und bekannten Verfahren durch Umsetzung der Polyetheralkohole mit Polyisocyanaten erfolgen.

Zu den für das erfindungsgemäße Verfahren eingesetzten Ausgangsverbindungen ist im Einzelnen folgendes zu sagen:

Als Polyisocyanate können für das erfindungsgemäße Verfahren alle Isocyanate mit zwei oder mehr Isocyanatgruppen im Molekül zum Einsatz kommen. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI), vorzugsweise TDI und MDI, besonders bevorzugt TDI, verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate. Bevorzugte Prepolymere sind MDI-Prepolymere mit einem NCO-Gehalt zwischen 20 und 35 % bzw. deren Mischungen mit Polymethylenpolyphenylenpolyisocyanaten (Roh-MDI).

Die eingesetzten Polyetheralkohole können allein oder in Kombination mit anderen Verbindungen mit mindestens zwei mit Isocyanatgruppen eingesetzt werden.

Als Verbindung mit mindestens zwei aktiven Wasserstoffatomen, die zusammen mit den eingesetzten Polyetheralkoholen eingesetzt werden können, kommen insbesondere Polyesteralkohole und vorzugsweise Polyetheralkohole mit einer Funktionalität von 2 bis 16, insbesondere von 2 bis 8, vorzugsweise von 2 bis 4 und einem mittleren Molekulargewicht $M_n$ im Bereich von 400 bis 20000 g/mol, vorzugsweise 1000 bis 8000 g/mol, in Betracht.

Die Polyetheralkohole, die gegebenenfalls zusammen mit den eingesetzten Polyetheralkoholen eingesetzt werden, können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Saccharose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Formweichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren zur Herstellung dieser Polyetheralkohole auch DMC-Katalysatoren zum Einsatz kommen.

Für bestimmte Einsatzgebiete, insbesondere zur Erhöhung der Härte der Polyurethan-Weichschaumstoffe, können auch sogenannte polymermodifizierte Polyole mitverwendet werden. Derartige Polyole können beispielsweise durch in-situ Polymerisation von ethylenisch ungesättigten Monomeren, vorzugsweise Styrol und/oder Acrylnitril, in Polyetheralkoholen hergestellt werden. Zu den polymermodifizierten Polyetheralkoholen gehören auch Polyharnstoffdispersionen enthaltende Polyetheralkohole, die vorzugsweise durch Umsetzung von Aminen mit Isocyanaten in Polyolen hergestellt werden.

Zur Herstellung von Weichschäumen und Integralschäumen werden insbesondere zwei- und/oder dreifunktionelle Polyetheralkohole eingesetzt. Zur Herstellung von Hartschäumen werden insbesondere Polyetheralkohole eingesetzt, die durch Anlagerung von Alkylenoxiden an vier- oder höherfunktionelle Starter, wie Zuckeralkohole oder aromatische Amine hergestellt werden.

In einer besonderen Ausführungsform können zur Erhöhung der Härte zusätzlich hydroxyfunktionalisierte Fette, Öle, Fettsäuren, Fettsäureester eingesetzt werden.

Zu den Verbindungen mit mindestens zwei aktiven Wasserstoffatomen b) gehören auch die Kettenverlängerungs- und Vernetzungsmittel. Als Kettenverlängerungs- und Vernetzungsmittel werden vorzugsweise 2- und 3-funktionelle Alkohole mit Molekulargewichten von 62 bis 800 g/mol, insbesondere im Bereich von 60 bis 200 g/mol, verwendet. Beispiele sind Ethylenglykol, Propylenglykol, Diethylenglykol, Triethylenglykol, Dipropylenglykol, Tripropylenglykol, niedermolekulare Polypropylen- und Polyethylenoxide, wie Lupranol® 1200, Butandiol-1,4, Glycerin oder Trimethylolpropan. Als Vernetzungsmittel können auch Diamine, Sorbit, Glycerin, Alkonolamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Das erfindungsgemäße Verfahren erfolgt zumeist in Anwesenheit von Aktivatoren, beispielsweise tertiären Aminen oder organischen Metallverbindungen, insbesondere Zinnverbindungen. Als Zinnverbindungen werden bevorzugt zweiwertige Zinnsalze von Fettsäuren wie Zinndioktoat und zinnorganische Verbindungen wie Dibutylzinndilaurat verwendet.

Als Treibmittel zur Herstellung der Polyurethan-Schaumstoffe wird bevorzugt Wasser eingesetzt, das mit den Isocyanatgruppen unter Freisetzung von Kohlendioxid reagiert. Bevorzugt wird Wasser in einer Menge von 0,5 bis 6 Gew.-%, insbesondere bevorzugt in einer Menge von 1,5 bis 5,0 Gew.-% verwendet. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%. Kohlendioxid wird von den physikalischen Treibmittel bevorzugt, welches bevorzugt in Kombination mit Wasser verwendet wird.

Zur Herstellung der Polyurethan-Weichschaumstoffe können üblicherweise auch Stabilisatoren sowie Hilfs- und/oder Zusatzstoffe eingesetzt werden.

Als Stabilisatoren kommen vor allem Polyethersiloxane, bevorzugt wasserlösliche Polyethersiloxane, in Frage. Diese Verbindungen sind im allgemeinen so aufgebaut, dass ein langkettiges Copolymerisat aus Ethylen- und Propylenoxid mit einem Polydimethylsiloxanrest verbunden ist.

Die Umsetzung erfolgt gegebenenfalls in Anwesenheit von Hilfs- und/oder Zusatzstoffen wie Füllstoffen, Zellreglern, oberflächenaktiven Verbindungen und/oder Flammschutzmitteln. Bevorzugte Flammschutzmittel sind flüssige Flammschutzmittel auf Halogen-Phosphor-Basis wie Trichlorpropylphosphat, Trichlorethylphosphat und halogenfreie Flammschutzmittel wie Exolit® OP 560 (Clariant International Ltd).

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Zur Herstellung der Polyurethane werden die organischen Polyisocyanate mit den Verbindungen mit mindestens zwei aktiven Wasserstoffatomen im Beisein der Treibmittel sowie gegebenenfalls der Katalysatoren und Hilfs- und/oder Zusatzstoffe zur Reaktion gebracht.

Bei der Herstellung der Polyurethane werden das Isocyanat und die Polyolkomponente zumeist in einer solchen Menge zusammengebracht, dass das Äquivalenzverhältnis von Isocyanatgruppen zur Summe der aktiven Wasserstoffatome 0,7 bis 1,25, vorzugsweise 0,8 bis 1,2 beträgt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft für die Herstellung von Formweichschaumstoffen ist es, nach dem sogenannten Zweikomponentenverfahren zu arbeiten, bei dem eine Polyol- und eine Isocyanatkomponente hergestellt und verschäumt werden. Die Komponenten werden vorzugsweise bei einer Temperatur im Bereich zwischen 15 bis 90 °C, vorzugsweise 20 bis 60 °C und besonders bevorzugt 20 bis 35 °C vermischt und in das Formwerkzeug beziehungsweise auf die Bandstraße gebracht. Die Temperatur im Formwerkzeug liegt zumeist im Bereich zwischen 20 und 110 °C, vorzugsweise 30 bis 60 °C und besonders bevorzugt 35 bis 55 °C.

Blockweichschaumstoffe können in diskontinuierlichen oder kontinuierlichen Anlagen, wie beispielweise nach dem Planiblock-, dem Maxfoam-, dem Draka-Petzetakis und dem Vertifoam-Verfahren verschäumt werden.

Die unter Verwendung von mittels DMC-Katalysatoren hergestellten Polyetheralkoholen hergestellten Polyurethan-Weichschaumstoffe zeichnen sich gegenüber ansonsten identischen Produkten, bei denen die eingesetzten Polyetheralkohole aus hydroformylierten und hydrierten Ölen und Fetten mittels basischer Katalysatoren hergestellt wurden, durch einen deutlich verringerten Geruch, deutlich verringerte Werte für das Fogging sowie eine signifikant verringerte Rissbildung, sowie verbesserte Druckverformungsrest, vor und nach Alterung, aus. Weiterhin weisen die erfindungsgemäßen Schaumstoffe eine höhere Offenzelligkeit auf, was sich beispielsweise in einer erhöhten Luftdurchlässigkeit zeigt.

Das erfindungsgemäße Verfahren zur Herstellung von Polyetheralkoholen bietet zum einem den Vorteil, dass kommerziell erhältliche Fette wie Sojaöl, Sonnenblumenöl, Rapsöl oder auch Palmöl verwendet werden können, die in großen Mengen auf dem Weltmarkt verfügbar sind. Zum anderen können, bedingt durch den Herstellungsprozess, durch Variation der Reaktionsbedingungen, wie Druck, Temperatur, Katalysatorart und -menge und/oder Reaktionsdauer bzw. Verweilzeit die Funktionalitäten der Fette und somit auch die Endfunktionalitäten der resultierenden Polyole nach anschließender Anlagerung von Alkylenoxiden gezielt eingestellt und für die gewünschte Eigenschaft im Polyurethan-Weichschaum angepasst werden.

Gegenüber dem Einsatz von hydroxyfunktionalisierten natürlichen Fetten für die Anlagerung von Alkylenoxiden, die über eine Epoxidierung der Doppelbindungen im Fett mit anschließender Ringöffnung/Hydrolyse des Epoxidrings hergestellt wurden, wie in JP 2005320431 und WO 2006/047436 beschrieben, hat das erfindungsgemäße Verfahren ebenfalls Vorteile. So hat die Verwendung von epoxidierten/ringgeöffneten Fetten gegenüber der Verwendung von hydroformylierten/hydrierten Fetten den Nachteil, dass nicht hydrolysierte Epoxid-Gruppen bei der Anlagerung von Alkylenoxiden mitreagieren können. Dies kann zu einer verstärkten Vernetzung des Polyetheralkohols und einer breiten Molekulargewichtsverteilung und somit zu hohen Viskositäten führen, was sich nachteilig auf die Verarbeitbarkeit und auf die mechanischen Eigenschaften im resultierenden Polyurethan-Weichschaumstoffs auswirkt. Zudem ist der Herstellprozess von alkoxylierten Produkten auf Basis epoxiderter/ringgeöffneter Hydroxyfette mit höheren Fertigungskosten verbunden, da beim Epoxidierungsprozess für die üblichen Stahlsorten korrosive Einsatzstoffe zum Einsatz kommen, die entsprechende kostenintensive Reaktormaterialien verlangen.

Die Erfindung soll an den nachstehenden Beispielen näher erläutert werden.

Beispiel 1 (Sojabohnenöl): Hydroformylierung und anschließende Hydrierung

750 g Sojabohnenöl-Glycerid wurden diskontinuierlich in einem Autoklav mit 0,13 Gew.-% Dicobaltoktacarbonyl als Katalysator unter Zusatz von 75 g Wasser bei 160 °C und unter einem Synthesegasdruck von 280 bar bei einem Mischungsverhältnis von Wasserstoff zu Kohlenmonoxid von 1:1 10 Stunden umgesetzt. Der Verbrauch an Synthesegas, zu erkennen an einem Druckabfall in Autoklaven wurde durch Nachpressen ergänzt. Nach dem Entspannen des Autoklaven, wurde der Reaktionsaustrag mit 10 Gew.%-iger Essigsäure durch Einleiten von Luft oxidativ von Cobaltkatalysator befreit. Die entstehende die organische Produktphase wurde abgetrennt, mit Wasser gewaschen, von der wässrigen Phase abgetrennt und mit Raney-Nickel bei 125 °C und einem Wasserstoffdruck von 280 bar 10 h hydriert. Der Reaktionsaustrag wies folgende Kennzahlen auf:

Jodzahl: 2,5 Jod/100g
CO-Zahl: 7 mg KOH/g
OH-Zahl: 136 mg KOH/g
SZ-Zahl: 1,6 mg KOH/g

Beispiel 2 (Rapsöl): Hydroformylierung und anschließende Hydrierung

750 g Rapsöl-Glycerid wurden diskontinuierlich in einem Autoklav mit 0,13 Gew.-% Dicobaltoktacarbonyl als Katalysator unter Zusatz von 75 g Wasser bei 160 °C und unter einem Synthesegasdruck von 280 bar bei einem Mischungsverhältnis von Wasserstoff zu Kohlenmonoxid von 1:1 10 Stunden umgesetzt. Der Verbrauch an Synthesegas, zu erkennen an einem Druckabfall in Autoklaven, wurde durch Nachpressen ergänzt. Nach dem Entspannen des Autoklaven wurde der Reaktionsaustrag mit 10 Gew.%iger Essigsäure durch Einleiten von Luft oxidativ von Cobaltkatalysator befreit. Die entstehende organische Produktphase wurde abgetrennt, mit Wasser gewaschen, von der wässrigen Phase abgetrennt und mit Raney-Nickel bei 125 °C und einem Wasserstoffdruck von 280 bar 10 h hydriert. Der Reaktionsaustrag wies folgende Kennzahlen auf:

Jodzahl: 3,5 Jod/100g
CO-Zahl: 5 mg KOH/g
OH-Zahl: 140 mg KOH/g
SZ-Zahl: 2,1 mg KOH/g

Beispiel 3 (Sonnenblumenöl): Hydroformylierung und anschließende Hydrierung

750 g Sonnenblumenöl-Glycerid wurden diskontinuierlich in einem Autoklav mit 0,13 Gew.% Dicobaltoktacarbonyl als Katalysator unter Zusatz von 75 g Wasser bei 160 °C und unter einem Synthesegasdruck von 280 bar bei einem Mischungsverhältnis von Wasserstoff zu Kohlenmonoxid von 1:1 10 Stunden umgesetzt. Der Verbrauch an Synthesegas, zu erkennen an einem Druckabfall in Autoklaven, wurde durch Nachpressen ergänzt. Nach dem Entspannen des Autoklaven wurde der Reaktionsaustrag mit 10 Gew.%iger Essigsäure durch Einleiten von Luft oxidativ von Cobaltkatalysator befreit. und Die entstehende organische Produktphase wurde abgetrennt, mit Wasser gewaschen, von der wässrigen Phase abgetrennt und mit Raney-Nickel bei 125 °C und einem Wasserstoffdruck von 280 bar 10 h hydriert. Der Reaktionsaustrag wies folgende Kennzahlen auf:

Jodzahl: 1,2 Jod/100g
CO-Zahl: 5 mg KOH/g
OH-Zahl: 120 mg KOH/g
SZ-Zahl: 2,5 mg KOH/g

Beispiel 4: Herstellung eines Polyetheralkohols aus dem Produkt von Beispiel 1 mittels DMC-Katalyse

700 g des in Beispiel 1 hergestellten hydroxyfunktionalisierten Sojabohnenöls wurden in einem 5-Liter-Rührkesselreaktor mit 3,3 g einer 5,97 %igen Suspension eines Zinkhexacyanocobaltats versetzt und bei 130 °C und einem Vakuum von ca. 40 mbar für 30 min entwässert. Anschließend wurden 261 g Propylenoxid zudosiert und das Anspringen der Reaktion abgewartet, was an einer kurzzeitigen Temperaturerhöhung und einem schnellen Abfallen des Reaktordruckes erkennbar war. Nachfolgend wurden bei gleicher Temperatur 1651 g eines Gemisches aus 1390 g Propylenoxid und 261 g Ethylenoxid in einem Zeitraum von 1,5 Stunden zudosiert. Nach Erreichen eines konstanten Reaktordruckes wurden nicht umgesetzte Monomere und andere flüchtige Bestandteile im Vakuum abdestilliert und das Produkt abgelassen. Das Polyetheralkohol wurde nicht über eine zusätzlich Desordorierungskolonne aufgearbeitet.
Der erhaltene, farblose Polyetheralkohol besaß folgende Kennwerte:

| | |
|---|---|
| Hydroxylzahl | 52 mg KOH/g |
| Säurezahl | 0,048 mg KOH/g |
| Wassergehalt | 0,01 % |
| Viskosität (25°C) | 530 mPa·s |
| Farbzahl Pt/Co | 56 |
| Alkalität | <1 ppm |
| $M_w$ | 3256 g/mol |
| Polydispersität D | 1,56 |
| Geruch: | 1,3 |

Beispiel 5: Herstellung eines Polyetheralkohols aus dem Produkt von Beispiel 2 mittels DMC-Katalyse

680 g des unter Beispiel 2 hergestellten hydroxyfunktionalisierten Rapsöls wurden in einem 5-Liter-Rührkesselreaktor mit 3,2 g einer 5,97 %igen Suspension eines Zinkhexacyanocobaltats versetzt und bei 130 °C und einem Vakuum von ca. 40 mbar für 30 min entwässert. Anschließend wurden 254 g Propylenoxid zudosiert und das Anspringen der Reaktion abgewartet, was an einer kurzzeitigen Temperaturerhöhung und einem schnellen Abfallen des Reaktordruckes erkennbar war. Nachfolgend wurden bei gleicher Temperatur 1603 g eines Gemisches aus 1349 g Propylenoxid und 254 g Ethylenoxid in einem Zeitraum von 1,5 Stunden zudosiert. Nach Erreichen eines konstanten Reaktordruckes wurden nicht umgesetzte Monomere und andere flüchtige Bestandteile im Vakuum abdestilliert und das Produkt abgelassen. Das Polyetheralkohol wurde nicht über eine zusätzlich Desordorierungskolonne aufgearbeitet.
Der erhaltene, farblose Polyetheralkohol besaß folgende Kennwerte:

| | |
|---|---|
| Hydroxylzahl | 51 mg KOH/g |
| Säurezahl | 0,005 mg KOH/g |
| Wassergehalt | 0,01 % |
| Viskosität (25 °C) | 593 mPa·s |
| Farbzahl Pt/Co | 31 |
| Alkalität | < 1 ppm |
| $M_w$ | 3288 g/mol |
| Polydispersität D | 1,61 |
| Geruch: | 1,5 |

Beispiel 6: Herstellung eines Polyetheralkohols aus dem Produkt aus Beispiel 3 mittels DMC-Katalyse

728 g des unter Beispiel 3 hergestellten hydroxyfunktionalisierten Sonnenblumenöls wurden in einem 5-Liter-Rührkesselreaktor mit 3,4 g einer 5,97 %igen Suspension eines Zinkhexacyanocobaltats versetzt und bei 130 °C und einem Vakuum von ca. 40 mbar für ca. 30 min entwässert. Anschließend wurden 271 g Propylenoxid zudosiert und das Anspringen der Reaktion abgewartet, was an einer kurzzeitigen Temperaturerhöhung und einem schnellen Abfallen des Reaktordruckes erkennbar war. Nachfolgend wurden bei gleicher Temperatur 1716 g eines Gemisches aus 1444 g Propylenoxid und 272 g Ethylenoxid in einem Zeitraum von 1,5 Stunden zudosiert. Nach Erreichen eines konstanten Reaktordruckes wurden nicht umgesetzte Monomere und andere flüchtige Bestandteile im Vakuum abdestilliert und das Produkt abgelassen. Das Polyetheralkohol wurde nicht über eine zusätzlich Desordorierungskolonne aufgearbeitet.
Der erhaltene, farblose Polyetheralkohol besaß folgende Kennwerte:

| Hydroxylzahl | 49 mg KOH/g |
|---|---|
| Säurezahl | 0,041 mg KOH/g |
| Wassergehalt | 0,01 % |
| Viskosität (25°C) | 602 mPa·s |
| Farbzahl Pt/Co | 35 |
| Alkalität | < 1 ppm |
| $M_w$ | 3151 g/mol |
| Polydispersität D | 1,74 |
| Geruch: | 1,4 |

Die folgenden Kennwerte sind nach den genannten Normen, internen Prüfverfahren bzw. Messmethoden bestimmt worden:

| Wassergehalt in Gew.-%: | DIN 51777 |
|---|---|
| Hydroxylzahl in mgKOH/g | DIN 53240 |
| Säurezahl in mgKOH/g | DIN EN ISO 3682 |
| Viskosität (25 °C): in mPa·s | DIN 51 550 |
| Farbzahl Pt/Co: | DIN ISO 6271 |
| lodzahl in $gl_2/100g$ | DIN 53241 |
| CO-Zahl in mgKOH/g | DIN 53173 |
| Alkalität in ppm: | Titrimetrisch |
| $M_n$ in g/mol: | mittleres Zahlenmittel des Molekulargewichtes bestimmt mittels Gelpermeationschromatographie |
| Polydispersität D = $M_w/M_n$ | bestimmt mttels Gelpermeationschromatographie |
| Geruch: | Prüfverfahren PPU 03/03-04 vom 15.02.2002 |

Herstellung der Polyurethan-Weichschaumstoffe

Die in Tabelle 1 genannten Ausgangsprodukte wurden in den in Tabelle 1 aufgeführten Mengenverhältnissen zur Umsetzung gebracht.

Alle Komponenten außer dem Isocaynat Lupranat® T80A wurden zunächst durch intensives Mischen zu einer Polyolkomponente vereinigt. Danach wurde das Lupranat® T80 A unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 1 aufgeführt.

Die folgenden Kennwerte sind nach den genannten Normen, Arbeits- und Prüfanweisungen bestimmt worden:

| Raumgewicht in kg/m$^3$ | DIN EN ISO 845 |
|---|---|
| VOC Rizinusölsäurezyklus in ppm | PB VWL 709 |
| FOG Rizinusölsäurezyklus in ppm | PB VWL 709 |
| Luftdurchlässigkeit in dm$^3$/min | DIN EN ISO 7231 |
| Stauchhärte, 40 % Verformung in kPa | DIN EN ISO 2439 |
| Eindruckhärte, 25 % Verformung | DIN EN ISO 2439 |
| Eindruckhärte, 40 % Verformung | DIN EN ISO 2439 |
| Eindruckhärte, 65 % Verformung | DIN EN ISO 2439 |
| Dehnung in % nach | DIN EN ISO 1798 |
| Zugfestigkeit in kPa | DIN EN ISO 1798 |
| Rückprall-Elastizität in % | DIN EN ISO 8307 |
| Druckverformungsrest in % | DIN EN ISO 3386 |

(fortgesetzt)

| Wet-Compression-Set | Arbeitsanweisung AA U10-131-041 vom 06.02.02 |
|---|---|

Bestimmung des Wet-Compression-Set erfolgte nach der Arbeitsanweisung AA U10-131-041 vom 06.02.02:

Nach mittels Messschieber bzw. Messtaster wird die Höhe an einer vorher markierten Stelle der Schaum-Prüflinge der Maße 50 mm x 50 mm x 25 mm bestimmt. Anschließend werden die Prüflinge zwischen zwei Druckplatten gelegt und durch Abstandsstücke von 7,5 mm auf die Höhe mittels Einspannvorrichtung zusammen gedrückt.

Die Lagerung im Klimaschrank bei 50 °C und 95 % rel. Luftfeuchtigkeit beginnt unmittelbar nach dem Einspannen. Nach 22 h werden die Schaum-Prüflinge in kürzester Zeit aus der Einspannvorrichtung entfernt und auf einer Oberfläche mit geringer Wärmeleitung (Tablett) zum entspannen im Normklima 30 min zwischengelagert. Anschließend wird die Resthöhe an der markierten Stelle mit dem gleichen Messmittel bestimmt.

Der Wet-Compression-Set bezieht sich auf die Verformung und wird wie folgt berechnet:

$$\text{Wet-Compression-Set} = h_0 - h_R * 100 / (h_0 - 7,5 \text{ mm}) \text{ in } \%$$

$h_0$     Ursprungshöhe in mm
$h_R$     Resthöhe des Prüfkörpers in mm

Tabelle 1

|  | Beispiel 4/1 | Vergleich 1 | Beispiel 4/2 | Vergleich 2 |
|---|---|---|---|---|
| Lupranol® 2084 |  | 100,00 |  | 100,00 |
| Polyether, gemäß Beispiel 4 | 100,00 |  | 100,00 |  |
| Tegoamin® B 4900 | 1,00 | 1,00 | 1,00 | 1,00 |
| Dabco® NE 500 | 0,20 | 0,20 | 0,30 | 0,30 |
| Kosmos® EF | 0,45 | 0,45 | 0,45 | 0,45 |
| Kosmos® 54 | 0,15 | 0,15 | 0,15 | 0,15 |
| Wasser (zus.) | 3,80 | 3,80 | 2,30 | 2,30 |
| Lupranat® T80A - Index | 110 | 110 | 115 | 115 |
| Luftdurchlässigkeit in $dm^3$/min | 98 | 115 | 56 | 62 |
| VOC in ppm | 1 | 3 | 2 | 4 |
| FOG in ppm<br>Davon Irganox 1135 | 82<br>80 | 93<br>92 | 108<br>105 | 115<br>113 |
| Raumgewicht in $kg/m^3$ | 25,8 | 26,1 | 37,3 | 38,5 |
| Zugfestigkeit in kPa | 131 | 156 | 107 | 115 |
| Dehnung in % | 215 | 236 | 201 | 199 |
| Stauchhärte, 40 % Verformung in kPa | 3,5 | 3,2 | 3,4 | 3,7 |
| Druckverformungsrest in % | 2,4 | 2,3 | 3,0 | 2,8 |
| Wet-Compression-Set | 15,1 | 16,2 | 11,4 | 9,2 |
| Rückprall-Elastizität in % | 49 | 45 | 51 | 54 |
| Eindruckhärte, 40 % Verformung | 154 | 125 | 136 | 156 |
| Feuchtwärmelagerung Nach DIN EN ISO 2240 |  |  |  |  |

(fortgesetzt)

|  | Beispiel 4/1 | Vergleich 1 | Beispiel 4/2 | Vergleich 2 |
|---|---|---|---|---|
| Stauchhärte, 40 % Verformung in kPa | -27 | -31 | -36 | -53 |
| Zugfestigkeit in kPa | -34 | -43 | -3 | -28 |
| Dehnung in % | -9 | -5 | +10 | +25 |
| Druckverformungsrest in % | 3,0 | 2,3 | 2,7 | 2,0 |

Tabelle 2

|  | Beispiel 5/1 | Beispiel 5/2 | Beispiel 6/1 | Beispiel 6/2 |
|---|---|---|---|---|
| Polyether gemäß Beispiel 5 und 6 | 100,00 | 100,00 | 100,00 | 100,00 |
| Tegoamin® B 4900 | 1,00 | 1,00 | 1,00 | 1,00 |
| Dabco® NE 500 | 0,20 | 0,20 | 0,30 | 0,30 |
| Kosmos® EF | 0,45 | 0,45 | 0,45 | 0,45 |
| Kosmos® 54 | 0,15 | 0,15 | 0,15 | 0,15 |
| Wasser (zus.) | 3,80 | 2,30 | 3,80 | 2,30 |
| Lupranat® T80A - Index | 110 | 115 | 110 | 115 |
| Luftdurchlässigkeit in dm$^3$/min | 93 | 62 | 111 | 82 |
| VOC in ppm | 2 | 4 | 2 | 1 |
| FOG in ppm<br>davon Irganox 1135 | 74<br>69 | 85<br>78 | 110<br>105 | 98<br>92 |
| Raumgewicht in kg/m$^3$ | 26,3 | 25,5 | 34,2 | 36,3 |
| Zugfestigkeit in kPa | 128 | 146 | 116 | 109 |
| Dehnung in % | 209 | 252 | 199 | 205 |
| Stauchhärte, 40 % Verformung in kPa | 3,3 | 3,5 | 3,6 | 3,4 |
| Druckverformungsrest in % | 2,6 | 2,1 | 2,9 | 3,1 |
| Wet-Compression-Set | 14,1 | 15,4 | 12,6 | 10,8 |
| Rückprall-Elastizität in % | 51 | 47 | 55 | 49 |
| Eindruckhärte, 40 % Verformung | 148 | 133 | 142 | 160 |
| Feuchtwärmelagerung Nach DIN EN ISO 2240 |  |  |  |  |
| Stauchhärte, 40 % Verformung in kPa | -15 | -28 | -32 | -50 |
| Zugfestigkeit in kPa | -32 | -40 | -28 | -31 |
| Dehnung in % | -5 | +8 | -7 | +12 |
| Druckverformungsrest in % | 2,7 | 2,9 | 2,5 | 3,1 |

Erläuterungen zu den Tabellen

| Lupranol® 2084 | Polyetherol mit einer Hydroxylzahl von 48 mgKOH/g und einer Viskosität von 600 mPa·s (BASF Akteingesellschaft) |
|---|---|
| Dabco® NE 500: | einbaubarer Aminkatalysator (Air Products and Chemicals, Inc.) |
| Kosmos® EF: | einbaubarer Zinnkatalysator (Degussa AG) |

(fortgesetzt)

| Kosmos® 54: | einbaubarer Metallkatalysator (Degussa AG) |
| Tegostab® B 4900: | Silikonstabilisator (Degussa AG) |
| Lupranat® T80 A: | 2,4-/2,6-Toluylendiisocyanatgemisch im Verhältnis 80:20 (BASF Aktiengesellschaft) |

**Patentansprüche**

1. Verfahren zur Herstellung von Polyetheralkoholen, umfassend die Schritte

   a) Umsetzung eines ungesättigten natürlichen Öls oder Fetts mit einem Gemisch aus Kohlenmonoxid und Wasserstoff in Anwesenheit eines Übergangsmetall-Carbonylkomplexes des Kobalts als Katalysator,
   b) Deaktivierung und Entfernung des Katalysators,
   c) Umsetzung des Gemisches aus Schritt b) mit Wasserstoff
   d) Umsetzung des Produkts aus Schritt c) mit einem Alkylenoxid in Anwesenheit eines Katalysators.

2. Verfahren nach Anspruch 1, **dadurch gekennzeichnet, dass** als Katalysator in Schritt d) ein DMC-Katalysator eingesetzt wird.

3. Verfahren nach Anspruch 1, **dadurch gekennzeichnet, dass** die natürlichen Öle und Fette ausgewählt sind aus der Gruppe, enthaltend Rizinusöl, Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Wildrosenöl, Distelöl, Walnussöl, Palmöl, Fischöl, Kokosnussöl, Tallöl, Maiskeimöl, Leinsamenöl.

4. Verfahren nach Anspruch 1, **dadurch gekennzeichnet, dass** die natürlichen Öle und Fette ausgewählt sind aus der Gruppe, enthaltend Rizinusöl, Soja-, Palm-, Sonnenblumen- und Rapsöl.

5. Verfahren nach Anspruch 1, **dadurch gekennzeichnet, dass** die natürlichen Öle und Fette ausgewählt sind aus der Gruppe, enthaltend Soja-, Palm-, Sonnenblumen- und Rapsöl.

6. Verfahren nach Anspruch 1, **dadurch gekennzeichnet, dass** Schritt c) in Anwesenheit eines Katalysators durchgeführt wird.

**Claims**

1. A process for preparing polyether alcohols, which comprises the steps

   a) reaction of an unsaturated natural oil or fat with a mixture of carbon monoxide and hydrogen in the presence of a transition metal carbonyl complex of cobalt as catalyst,
   b) deactivation and removal of the catalyst,
   c) reaction of the mixture from step b) with hydrogen,
   d) reaction of the product from step c) with an alkylene oxide in the presence of a catalyst.

2. The process according to claim 1, wherein a DMC catalyst is used as catalyst in step d).

3. The process according to claim 1, wherein the natural oils and fats are selected from the group consisting of castor oil, grape seed oil, black cumin oil, pumpkin seed oil, borage seed oil, soybean oil, wheat germ oil, rapeseed oil, sunflower oil, peanut oil, apricot kernel oil, pistachio nut oil, almond oil, olive oil, macadamian nut oil, avocado oil, sea buckthorn oil, sesame oil, hemp oil, hazelnut oil, evening primrose oil, wild rose oil, safflower oil, walnut oil, palm oil, fish oil, coconut oil, tall oil, maize germ oil, linseed oil.

4. The process according to claim 1, wherein the natural oils and fats are selected from the group consisting of castor oil, soybean oil, palm oil, sunflower oil and rapeseed oil.

5. The process according to claim 1, wherein the natural oils and fats are selected from the group consisting of soybean oil, palm oil, sunflower oil and rapeseed oil.

6. The process according to claim 1, wherein step c) is carried out in the presence of a catalyst.

**Revendications**

1. Procédé de fabrication de polyéther-alcools, comprenant les étapes suivantes :

   a) la mise en réaction d'une huile ou graisse naturelle insaturée avec un mélange de monoxyde de carbone et d'hydrogène en présence d'un complexe de carbonyle de métal de transition de cobalt en tant que catalyseur,
   b) la désactivation et l'élimination du catalyseur,
   c) la mise en réaction du mélange de l'étape b) avec de l'hydrogène,
   d) la mise en réaction du produit de l'étape c) avec un oxyde d'alkylène en présence d'un catalyseur.

2. Procédé selon la revendication 1, **caractérisé en ce qu'**un catalyseur DMC est utilisé en tant que catalyseur à l'étape d).

3. Procédé selon la revendication 1, **caractérisé en ce que** les huiles et graisses naturelles sont choisies dans le groupe contenant l'huile de ricin, l'huile de pépin de raisin, l'huile de nigelle, l'huile de citrouille, l'huile de bourrache, l'huile de soja, l'huile de germe de blé, l'huile de colza, l'huile de tournesol, l'huile d'arachide, l'huile d'abricot, l'huile de pistache, l'huile d'amande, l'huile d'olive, l'huile de macadamia, l'huile d'avocat, l'huile d'argousier, l'huile de sésame, l'huile de chanvre, l'huile de noisette, l'huile d'onagre, l'huile de rose sauvage, l'huile de carthame, l'huile de noix, l'huile de palme, l'huile de poisson, l'huile de coco, le tall oil, l'huile de germe de maïs, l'huile de lin.

4. Procédé selon la revendication 1, **caractérisé en ce que** les huiles et graisses naturelles sont choisies dans le groupe contenant l'huile de ricin, l'huile de soja, de palme, de tournesol et de colza.

5. Procédé selon la revendication 1, **caractérisé en ce que** les huiles et graisses naturelles sont choisies dans le groupe contenant l'huile de soja, de palme, de tournesol et de colza.

6. Procédé selon la revendication 1, **caractérisé en ce que** l'étape c) est réalisée en présence d'un catalyseur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004096744 A
- WO 2005033167 A
- WO 2006012344 A
- US 6686435 B
- GB 2278350 A
- EP 1537159 B1
- EP 1537159 A
- JP 2005320437 B
- EP 1709678 A
- WO 2004096883 A
- WO 2007085548 A
- EP 654302 A
- EP 862947 A
- WO 0074844 A
- DE 19960148 A1
- DE 102004047524 A1
- WO 9852689 A
- DD 203734735
- JP 2005320431 B
- WO 2006047436 A

**In der Beschreibung aufgeführte Nicht-Patentliteratur**

- **D. REED.** *Urethanes Technology,* August 2005, 24-35
- Polyurethane. Kunststoff-Handbuch. Carl-Hanser-Verlag, 1966, vol. 7
- KUNSTSTOFF-HANDBUCH. 1983
- KUNSTSTOFF-HANDBUCH. 1993